# EUROPÄISCHE PATENTSCHRIFT

(11) **EP 3 033 295 B1**
(45) Veröffentlichungstag und Bekanntmachung des Hinweises auf die Patenterteilung: **31.01.2018**
(21) Anmeldenummer: 14759088.9
(22) Anmeldetag: 11.08.2014
(51) Int. Cl.: B66F 9/06, B66F 9/065

(54) **VORRICHTUNG UND VERFAHREN ZUM BEFÖRDERN VON LASTREGALEN MITTELS EINES TRANSPORTFAHRZEUGS AUF UNEBENER BODENFLÄCHE**
DEVICE AND METHOD FOR TRANSPORTING HEAVY DUTY RACKS BY MEANS OF A TRANSPORT VEHICLE ON AN UNEVEN GROUND SURFACE
DISPOSITIF ET PROCÉDÉ PERMETTANT DE TRANSPORTER DES ÉTAGÈRES AU MOYEN D'UN VÉHICULE DE TRANSPORT SUR UNE SURFACE DE SOL INÉGALE

(30) Priorität: 12.08.2013 DE 102013013438
(43) Veröffentlichungstag der Anmeldung: 22.06.2016
(73) Patentinhaber: Grenzebach Maschinenbau GmbH, 86663 Asbach-Baeumenheim (DE)
(72) Erfinder: MECKLINGER, Siegfried, 86675 Buchdorf (DE)
(74) Vertreter: Kindermann, Peter
(86) Internationale Anmeldenummer: PCT/DE2014/000409
(87) Internationale Veröffentlichungsnummer: WO 2015/021958

(56) Entgegenhaltungen:
- EP-A1- 0 102 706
- JP-A- 2007 283 958
- JP-U- S6 016 666
- TW-B- 474 885
- US-A1- 2007 288 123

## Beschreibung

Die vorliegende Erfindung betrifft ein Transportfahrzeug sowie ein Verfahren zum Befördern von Lastregalen auf einer unebenen Bodenoberfläche, und insbesondere ein autarkes Transportfahrzeug.

In einer Vielzahl von Unternehmensbereichen, zum Beispiel dem Handel mit Lebensmitteln und Haushaltsartikeln oder Industrie - und Haushaltsprodukten, liegen Waren in sortenreinen Quellpaletten mit gleichartigen Gebinden in Lastregalen vor. Ein Gebinde kann hierbei ein verpacktes oder unverpacktes Stückgut oder eine Warenzusammenstellung wie beispielsweise eine Kiste, ein Karton oder eine Steige mit Schüttgut oder mehreren Einzelgütern wie Getränkeflaschen oder Molkereiprodukten sein. Eine Gruppe von horizontal angeordneten Gebinden wird als eine Gebindelage bezeichnet. Eine Anzahl von mehreren vertikal aufeinander gestapelten Gebindelagen wird dagegen als eine Palette bezeichnet, im Allgemeinen in Verbindung mit einem entsprechenden Trägersystem, meist in Form einer stabilen Holzkonstruktion. Eine so genannte sortenreine Gebindelage oder Palette enthält nur Gebinde derselben Sorte oder Art.
Zur Zusammenstellung einer Lieferung an einen bestimmten Kunden müssen hieraus Paletten mit unterschiedlicher Bestückung an bestimmten Gebindelagen oder Gebinden zusammengestellt werden. Handelt es sich hierbei um eine Palette mit unterschiedlichen, jeweils sortenreinen Lagen, wird diese als eine lagenweise sortenreine oder Regenbogenpalette (Rainbow Pallet) bezeichnet. Vertikal aufeinander geschichtete Gebinde werden so genannte Stapel genannt.
Handelt es sich bei einer bestimmten Palette um eine Lieferung bei der lagenweise, stapelweise oder gemischte Zusammenstellungen von verschiedenen Gebinden erforderlich sind, wird von einer gemischten Palette gesprochen.

Zum Stand der Technik ist aus der WO 2008/068264 A1 ein Verfahren und eine Vorrichtung zum Kommissionieren von Waren, ein Lagerverwaltungssystem und die Verwendung von wenigstens einem autarken Transportfahrzeug bekannt.

Hierin werden im Wesentlichen das Beladen eines autarken Transportfahrzeugs, das automatische Fahren benötigter Palettierungseinheiten mittels eines autarken Transportfahrzeugs und das sequentielle Entladen der Palettierungseinheiten mittels eines Palettierungsroboters nach einem vorab ermittelten Packmuster beansprucht. Nach den weiteren Angaben werden die benötigten Gebindelagen in einem Hochregal vorgehalten. Im zugehörigen Lagerverwaltungssystem wird im Wesentlichen das Zusammenspiel der vorher beanspruchten Komponenten während des Beladens einer gemischten Palette beschrieben.

In der DE 20 2011 003469 U1 ist eine Vorrichtung zum definierten Zwischenlagern und Kommissionieren produzierter Waren gleicher Art, aber unterschiedlicher Größe beschrieben. Diese Vorrichtung weist eine Vielzahl von Transportfahrzeugen zum Transport von Stapel - Lafetten auf, wobei die Transportfahrzeuge mittels einer Mehrzahl von Induktions - Leitungen zur Stromversorgung und Steuerung bewegt und gesteuert werden.

Aus der den Oberbegriff des Patentanspruchs 1 bildenden Druckschrift JP S60 16666 U4 ist ein Transportfahrzeug zum Befördern von Lastregalen auf einer unebenen Bodenfläche bekannt, mit einem Gehäuse mit einer Trägerplatte zum Tragen und Transportieren eines Lastregals, mit zwei, beidseitig in der Mitte des Gehäuses an jeweils einer gesonderten Drehachse angelenkten, separat angetriebenen, Antriebsrädern und mit an der Vorderseite mindestens einem Stützrad und mit an der Rückseite mindestens einem Stützrad.

Ferner ist aus der Druckschrift US 2007/288123 A1 ein Verfahren und ein System zum Transport von Einrichtungs-Gegenständen bekannt.

Es ist die Aufgabe der vorliegenden Erfindung ein Transportfahrzeug und ein Verfahren zum Befördern von Lastregalen zu schaffen, mit dem der schnelle Transport von Ladegütern auch bei unebenem Boden und bei leichten Steigungen sicher ausgeführt werden kann.

Erfindungsgemäß wird diese Aufgabe hinsichtlich des Transportfahrzeugs durch die Merkmale des Patentanspruchs 1 und hinsichtlich des Verfahrens durch die Maßnahmen des Patentanspruchs 5 gelöst.

In den Unteransprüchen sind weitere vorteilhafte Ausgestaltungen der Erfindung gekennzeichnet.

Das erfindungsgemäße Transportfahrzeug sowie das zugehörige Verfahren wird im Folgenden näher beschrieben.
Es zeigen im Einzelnen:
Fig. 1 : eine Seitenansicht eines erfindungsgemäßen Transportfahrzeugs
Fig. 2: eine Seitenansicht des Transportfahrzeugs bei einer Schrägfahrt
Fig. 3: eine Seitenansicht des Transportfahrzeugs bei Bodenunebenheiten
Fig. 4: eine räumliche Detailansicht der Kinematik des Transportfahrzeugs
Fig. 5: eine Seitenansicht der Darstellung der Fig.4
Fig. 6: eine Draufsicht des Transportfahrzeugs

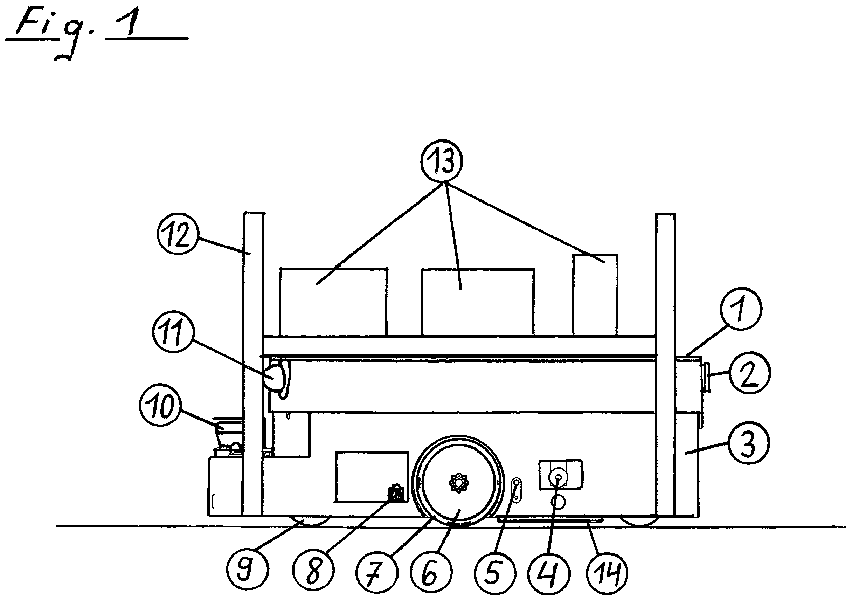

Die Fig.1 zeigt eine Seitenansicht eines erfindungsgemäßen Transportfahrzeugs. In dieser Ansicht ist mit 1 die Trägerplatte des Transportfahrzeugs bezeichnet, die nicht nur die Auflage für das gezeigte Lastregal 12 darstellt, sondern auch eine Funktion als Hubplatte aufweist wie später näher erläutert wird.
Das, das Transportfahrzeug umgebende Gehäuse 3 weist in dieser Ansicht ein, von der Seite gezeigtes, Anzeige - Display 2 auf. Dieses Anzeige - Display 2 kann Auskunft geben über die Art und die Zusammensetzung der auf dem Lastregal befindlichen Beladung, sowie über den Lageplatz von dem das Ladegut geholt wurde, als auch über den Zielort zu dem es befördert werden wird. Weiter kann im Anzeige - Display 2 auch der Ladezustand der das Transportfahrzeug antreibenden Batterien oder Energiespeicher angezeigt werden.

Um von außen auf die Bedienung des Transportfahrzeugs händisch Zugriff zu haben, ist das gezeigte Bedienelement 4 vorgesehen. Im Normalfall kann hier ein Nothalt des Transportfahrzeugs vorgesehen sein. Es können im Rahmen dieses Bedienelements 4 jedoch auch mehrere, eine Gruppe von Bedienelementen bildende Steuerungsmöglichkeiten für Eingriffe händischer Art, vorgesehen sein.

In der gezeigten Ansicht ist ferner in Fahrtrichtung ein Antriebsrad 6 gezeigt, dem auf der anderen gegenüberliegenden Seite ein weiteres Antriebsrad 6 entspricht. Die Vorderseite des Transportfahrzeugs, befindet sich auf der linken Seite der Fig. 1. Neben dem Antriebsrad 6 ist in dieser Ansicht ein Lagepunkt dargestellt der die Lage einer Drehachse 5 kennzeichnet. Die Drehachse des Antriebsrads 6 lässt sich um diese Drehachse 5 mittels eines, in dieser Ansicht vom Gehäuse verdeckten Winkelhebel verschwenken. Auf diese Weise ist gewährleistet, dass bei einer, durch Bodenunebenheiten verursachten, Querneigung des Transportfahrzeugs das Antriebsrad 6 den Kontakt mit der Lauffläche des Bodens beibehält. Der Belag 7 des Antriebsrads 6 ist mit 7 bezeichnet und so ausgestaltet, dass er maximale Reibung auf der Lauffläche des Bodens gewährleistet.

Die neben dem Antriebsrad 6 gezeigte Steckverbindung 8 ermöglicht die Aufladung der, das Antriebssystem des Transportfahrzeugs antreibende, Energiespeicher. Das können elektrische Batterien, Flüssiggas - Speicher oder andere Energiespeicher sein.

Zur Abstützung des Transportfahrzeugs dienen Stützräder, von denen in dieser Darstellung das vordere mit 9 bezeichnet ist.

An der Vorderseite des Transportfahrzeugs ist ein handelsüblicher 3D - Scanner installiert um Gefahren von Kollisionen, insbesondere unachtsame Personen, frühzeitig zu erkennen und diesen vorbeugen zu können.

Hinsichtlich des verwendeten 3D - Scanners , wird auf die neue Entwicklung der so genannten Minilinsen verwiesen, die in der Form von hunderten von Minilinsen nach dem Lichtfeldprinzip optische Informationen sammeln die dann später zu Bildern mit einer gewünschten Auflösung und / oder einem gewünschten Blickwinkel datentechnisch zusammengestellt werden können. Solche Minilinsen sind 3 - D - fähig, billig herzustellen und folgen dem Prinzip eines Insektenauges.

Die WLAN - Antenne 11 dient der Kommunikation mit einer, das Transportfahrzeug steuernden, Zentral - Leitstelle.
das Transportgut 13 stellt eine mögliche Beladung dar.

Mit 14 ist ein induktives Aufnahmeelement für elektrische Energie bezeichnet. Her kann nicht nur während der Fahrt elektrische Energie von den im Transportfahrtzeug angeordneten Speichern aufgenommen werden, es lassen sich über die hierbei im Boden installierten Leitungen auch zusätzlich oder ergänzend Steuerungsbefehle übermitteln. Anstelle von, im Boden fest verlegten, induktiv wirksam verlegten Leitungen können von einem Transportfahrzeug auch diesbezüglich bestimmte feste Stationen angefahren werden. Es können auch mobile induktiv wirksame Energieübertrager, in Form von am Boden liegenden Matten oder Platten zur Energieübertragung, zum Einsatz kommen.

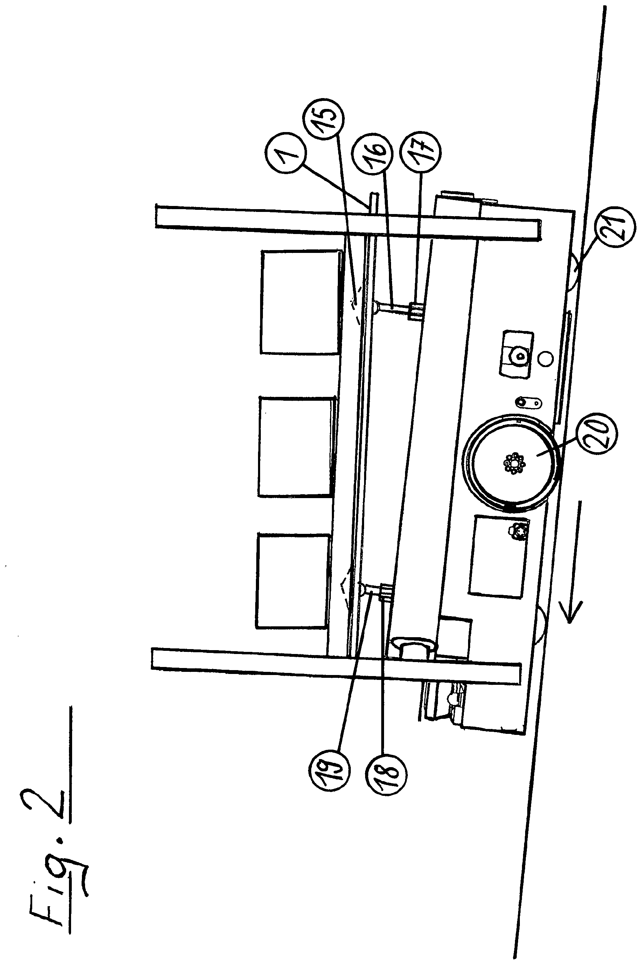

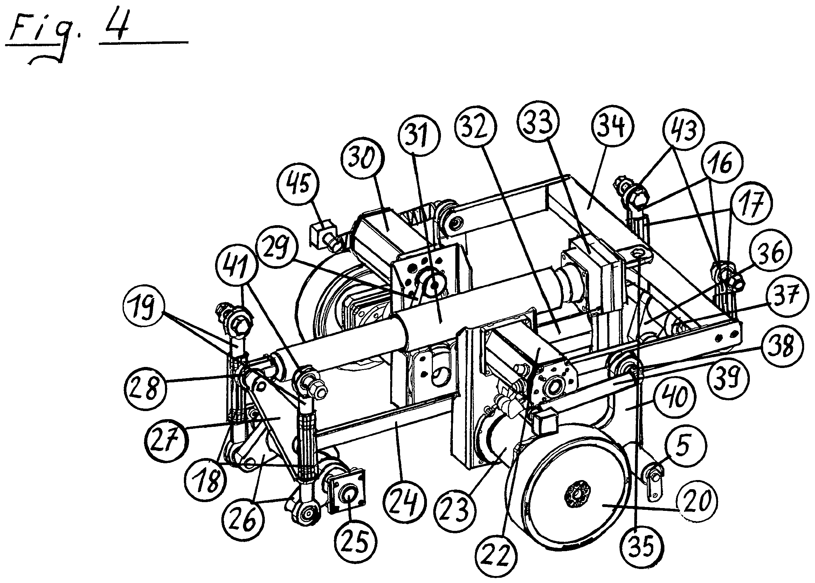

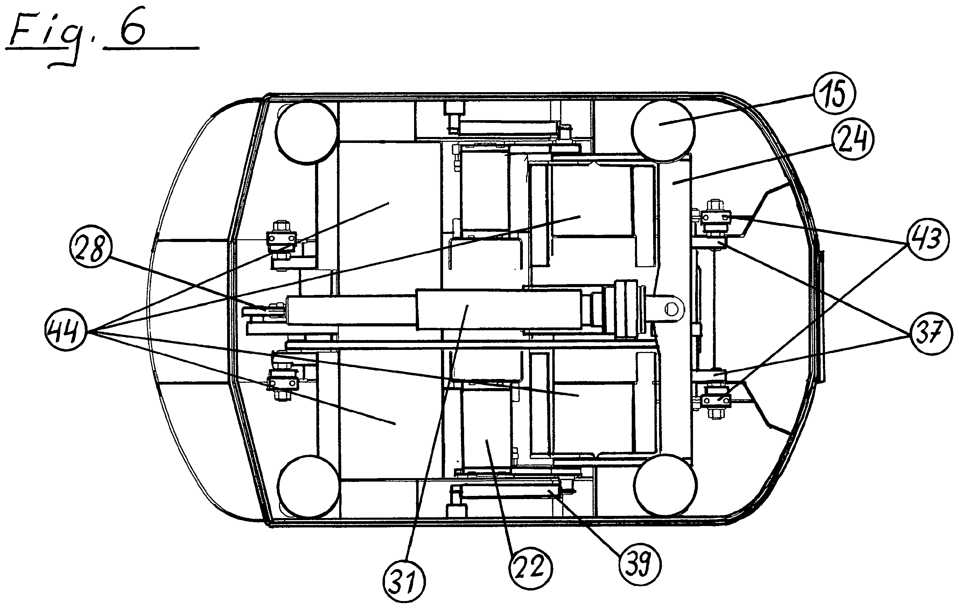

Die Fig. 2 zeigt eine Seitenansicht des Transportfahrzeugs bei einer Schrägfahrt. In dieser Darstellung ist das Transportfahrzeug einer relativ starken Steigung der Bodenfläche unterworfen. Die kann, bei hoch bestückten Lastregalen, zu einer nicht mehr tolerierbaren Neigung des Lastregals führen. Hierbei ist nicht nur die Neigung des Lastregals wegen der Rutschgefahr der Ladung zu beachten, sondern es muss auch gewährleist sein, dass der Schwerpunkt der Ladung, wegen der notwendigen Reibung der Antriebsräder mit der Bodenfläche, möglichst nahe im Bereich der Antriebsräder bleibt. Zur Korrektur einer Schieflage des Lastregals ist deshalb in der Fig. 2 eine Möglichkeit gezeigt, die Trägerplatte 1 so anzuheben, dass das Lastregal mehr in waagrechter Richtung angehoben wird.
Hierzu dienen auf der hinteren Seite des Transportfahrzeugs eine hintere Hubstange 16 mit einem zugehörigen Stellelement 17 und auf der vorderen Seite eine entsprechende Hubstange 19 mit dem zugehörigen Stellelement 18. In der Seitenansicht ist zu erkennen, dass die Trägerplatte 1 mit dem Lastregal über vordere und hintere Zentrierelemente 15 verbunden ist, die in entsprechende, gestrichelt gezeichnete, pyramidenförmige Aussparungen im Lastregal eingreifen. Eine diesbezügliche Darstellung der insgesamt vier Zentrierelemente 15 ist der Fig.6 zu entnehmen. Die Ansteuerung der genannten Stellelemente 17 und 18 kann separat erfolgen und ist unabhängig von der später, in der Fig.4 beschriebenen, Höhenverstellung der gesamten Trägerplatte 1.
Das linksseitige Antriebsrad ist hier mit 20 bezeichnet und das hintere Stützrad mit 21.

Zur Erfassung der Neigung des Transportfahrzeugs und des Lastregals und zur Steuerung der Stellelemente 17 und 18, wird ein Sensor verwendet, der jedoch nicht extra bezeichnet ist.
Da das erfindungsgemäße Transportfahrzeug den Transport von Lastregalen über schräge Ebenen bewältigen kann, kann in vielen Fällen auf teuere und steuerungstechnisch aufwendige Liftanlagen verzichtet werden.

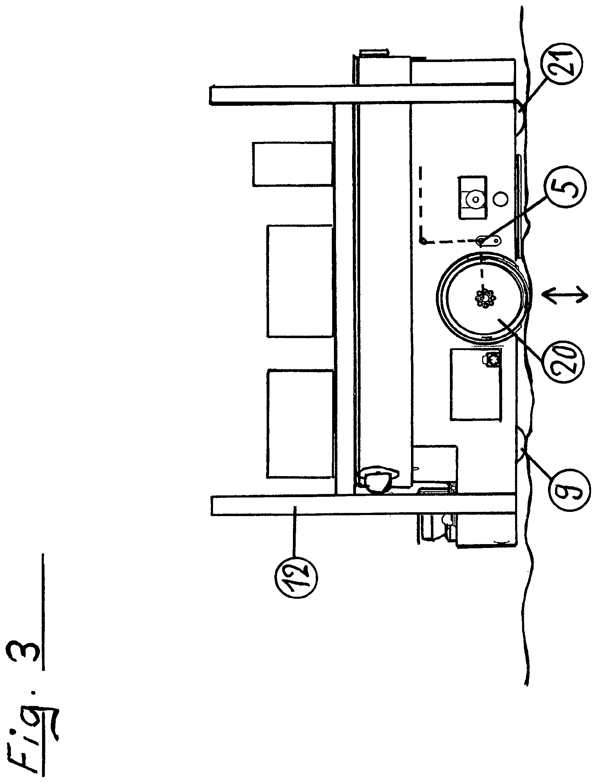

Die Fig. 3 zeigt eine Seitenansicht des Transportfahrzeugs bei Bodenunebenheiten. Neben dem vorderen Stützrad 9 und dem hinteren Stützrad 21, sowie des Lastregals 12 ist hier besonders auf die Darstellung des um die Drehachse 5 schwenkbaren Antriebsrads 20 zu achten. Da die Stellelemente 17 und 18 korrigierend auf eine Neigung des Transportfahrzeugs eingreifen, können sie auch bei Unebenheiten des Bodenbelags und daraus resultierenden Schwankungen des Lastregals, dafür sorgen, dass die Lage des Lastregals schnell korrigiert wird. Auf diese Weise wird gewährleistet, dass der Schwerpunkt der Last auf dem Lastregal immer im Bereich der Antriebsräder bleibt.

In der Fig. 4 ist eine räumliche Detailansicht der Kinematik des Transportfahrzeugs gezeigt. Diese Abbildung zeigt das Transportfahrzeug ohne das umhüllende Gehäuse 3. Auf Verbindungen zu dem Gehäuse 3 wird an entsprechender Stelle hingewiesen.
Zuerst wird die Kinematik der Antriebsräder erläutert.

Im Vordergrund sind das, aus der Fig. 3 bekannte, linksseitige Antriebsrad 20 und die Drehachse 5 zu erkennen. Das Achslager 23 für das linksseitige Antriebsrad 20 und das mit seinem darüber liegenden Servomotor 22 sind mittels eines, nicht näher bezeichneten und nur von hinten zu sehendem, Winkelblech zu einer Funktionseinheit verbunden. In diesem Winkelblech läuft ein Zahnriemen über den der Servomotor 22 die Rotationsachse des linksseitigen Antriebsrads 20 antreibt. Auf der gegenüberliegenden Seite ist der entsprechende Servomotor 30 für den rechtsseitigen Antrieb zu erkennen. Auf dieser Seite ist das entsprechende Winkelblech von der Rückseite zu sehen. Hier ist der in diesem Winkelblech laufende entsprechende Zahnriemen 29 zu erkennen. Die gesamte Funktionseinheit, bestehend aus dem Antriebsrad 20 mit dem Achslager 23, dem Servomotor 22 und dem Winkelblech mit seinem Zahnriemen, ist über den Winkelhebel 40 um die Drehachse 5 schwenkbar. Der Winkelhebel 40 ist über das Gelenk 38 an einem U - förmigen Querlenker 34 befestigt, an dessem anderen Ende das rechtsseitige Antriebsrad entsprechend befestigt ist. An dem Gelenk 38 ist weiter ein Federelement 39 gelagert, dessen anderer Lagerungspunkt am Gehäuse befestigt ist. Auf der in der Fig.4 sichtbaren linken Seite des Transportfahrzeugs ist dieser Anlenkpunkt als klötzchenförmige, kaum erkennbare, Lagerung gezeigt. Dagegen ist auf der gegenüberlegenden Seite dieser Punkt als Anlenkpunkt 45 des rechten Federelements bezeichnet. Das Federelement 39 dient dem Zweck, über den Winkelhebel 40 das Antriebsrad 20 auf die Bodenfläche zu drücken und somit sen Bodenkontakt des Antriebsrads 20 zu verbessern. Entsprechendes gilt für das gegenüber liegende rechte Antriebsrad.

Ein weitere kinematische Einrichtung wird im Folgenden zum Anheben eines Lastregals 12 erläutert.
Um ein Lastregal 12 aufnehmen zu können ist es erforderlich, dass das Transportfahrzeug nach dem Darunterfahren unter das Lastregal 12 dieses anhebt und seinen Bodenkontakt löst um es transportieren zu können.
Diesem Zweck dienen in direktem Kontakt die vorderen Hubstangen 19 und die hinteren Hubstangen 16, die auch aus der Fig.2 bekannt sind.
Angehoben und abgesenkt werden die Hubstangen 19 und 15 mittels eines Stellelements 31, das mittels einer Gewindespindel über einen ein - und ausfahrbaren Zylinder über einen Gelenkkopf 28 und einen angelenkten Hubdreh - Hebel 27 die hierfür notwendigen Kräfte aufbringt.
Aus der Fig.4 ist linksseitig deutlich zu erkennen wie der Hubdreh - Hebel 27 im Zusammenwirken mit jeweils einem vorderen Hubstangenhebel 26 mittels entsprechender Drehbewegungen um eine Drehachse 25 die notwendigen Lageveränderungen der beiden vorderen Hubstangen 19 bewirkt.
Die vorderen Hubstangenhebel 19 tragen jeweils die entsprechende vordere Trägerplatten - Aufhängung
Gleichzeitig ist diesem Bereich der Fig.4 zu entnehmen, dass an dem Hubdreh - Hebel 27 eine Schubstange 24 angelenkt ist, die die Bewegungen des Hubdreh - Hebels 27 über einen Achshebel 36 auf jeweils einen hinteren Schubstangenhebel 37 überträgt. Die Bewegungen der hinteren Schubstangenhebel 37 führen zu den notwendigen Lageveränderungen der beiden hinteren Hubstangen 16.
Die hinteren Hubstangenhebel 16 tragen jeweils die entsprechende hintere Trägerplatten - Aufhängung 43.
Die Bewegung des Stellelements 31 erfolgt über einen Antrieb 32 und eine, die Kraft umleitende, Kraftübertragung 33. Die Kraftübertragung 33 ist mittels eines Gabelkopfs 35 am Querlenker 34 befestigt. Da der Gabelkopf 35 drehbar am Querlenker 34 gelagert ist, kann sich der Querlenker 34, als Verbindungselement zwischen den Winkelhebeln 40, bewegen und so wird ermöglicht, dass die beiden Antriebsräder zueinander entgegengesetzte, vertikale Schwenkbewegungen ausführen. Die Stellelemente 18 für die vorderen Hubstangen 19 und die Stellelemente 17 für die hinteren Hubstangen 16 sind in der Fig.4 als geschwärzte Bereiche der entsprechenden Hubstangen gekennzeichnet. Ihre Funktion wurde in der Fig.2 erläutert.
Insgesamt wird durch die aufgezeigte Anordnung der Hubstangen 16 und 19, die dazwischen liegende Hebelanordnung 36, 24, 26, 27 und das Stellelement 31 in Zusammenwirkung mit dem Querlenker 34, sowie dessen Einwirken auf den Winkelhebel 40, erreicht, dass der Schwerpunkt der Last von dem Lastregal direkt im Bereich der Antriebsräder liegt.
Die Stützräder 9 und 21 haben deshalb im Wesentlichen lediglich eine stabilisierende Funktion.

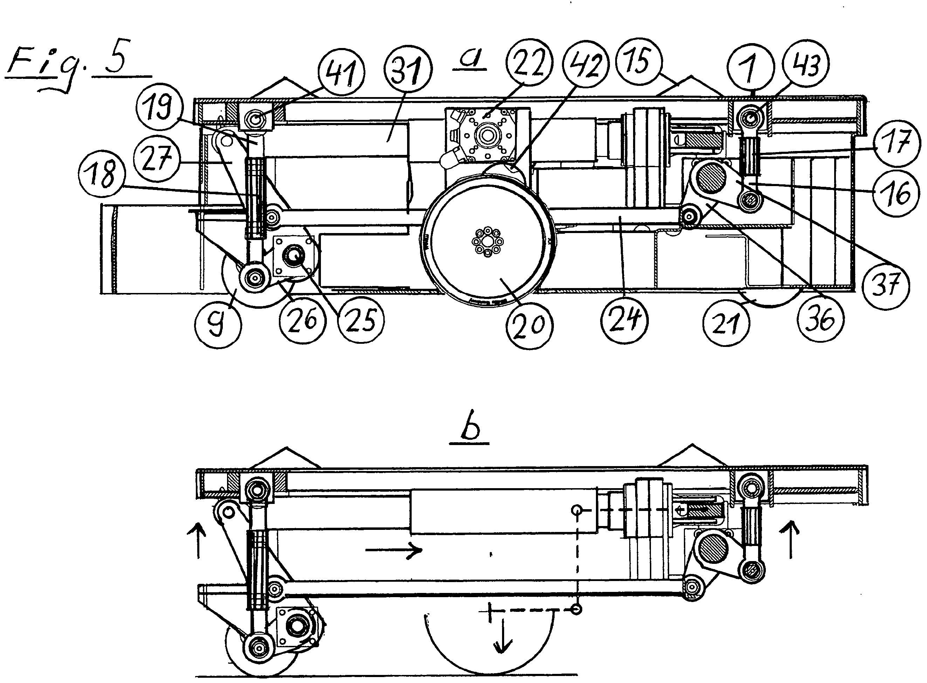

Die Fig.5 zeigt eine Seitenansicht der Darstellung der Fig.4. In der Fig.5a ist hierbei das Transportfahrzeug mit dem Gehäuse in der Seitenansicht gezeigt Damit die Funktionszusammenhänge der verschiedenen Hebelmechanismen deutlicher zu erkennen sind, ist in der Darstellung der Fig.5b das Gehäuse nicht gezeigt.
An zentraler Stelle sind das linke Antriebsrad 20 und die Stützräder 9 und 21 zu sehen. In diesem Bereich sind ferner der Servomotor 22 und ein Sensor 42 zur Erfassung der Drehbewegung des Antriebsrads 20 gezeigt. Der Sensor 20 findet seine Entsprechung in einem weiteren, nicht bezeichneten, Sensor des rechten Antriebsrads. Beide Sensoren können nicht nur die Umdrehungszahl des jeweiligen Antriebsrad erfassen, sondern lassen, auch in Verbindung mit der, vom Steuerungssystem oder weiteren Sensoren, ermittelten Geschwindigkeit des Transportfahrzeugs Rückschlüsse auf die Bodenhaftung jedes der beiden Antriebsräder zu.
Über dem Antriebsrad 20 ist das Stellelement 31 mit seiner Wirkverbindung zum Hubdreh - Hebel 27, dessen Lagerung in der Drehachse 25 und der Verbindung mit dem vorderen Hubstangenhebel 26 zu erkennen. In der Drehachse des Hubstangenhebels 26 sind, senkrecht stehend, die vordere Hubstange 19 mit der zugehörigen Trägerplatten - Aufhängung 41 und dem Stellelement 18 zu erkennen. Die am Hubdreh - Hebel 27 angelenkte Schubstange 24 führt über den Achshebel 36 und den hinteren Hubstangenhebel 37 zur, senkrecht stehenden, hinteren Hubstange 16 mit ihrem Stellelement 17. Die zur Hubstange 16 gehörende hintere Trägerplatten - Aufhängung 43 stellt die Verbindung zur Trägerplatte 1 her. Die Zentrierelemente 15 auf der Trägerplatte 1 ergänzen diese Darstellung.

Die Fig.6 zeigt eine Draufsicht des Transportfahrzeugs.
In dieser Fig.6 ist in zentraler Lage das Stellelement 31 mit dem, zum Hubdreh - Hebel führenden Gelenkkopf 28 und seiner Verbindung zur Schubstange 24 zu erkennen. In dieser Ansicht sind auch das linke, hier allein bezeichnete, Federelement 29 und der Servomotor 22, sowie die hinteren Hubstangenhebel 37 mit ihren Tragplatten - Aufhängungen 43 zu sehen. In dieser Darstellung von oben sind auch gleichzeitig alle vier Zentrierelemente 15 im Bereich der Hubstangen 16 und 19 zu erkennen. Des weiteren finden im Transportfahrzeug auch noch Stellplätze(44) für Energiespeicher Platz. Hierbei kann es sich um elektrische Batterien oder um andere flüssige oder gasförmige Energiespeicher handeln.

Die Steuerung der komplexen Bewegungsvorgänge und die Signalverarbeitung der verwendeten Sensoren erfordern ein spezielles Steuerungsprogramm.

### Bezugszeichenliste

- 1: Trägerplatte, Hubplatte
- 2: Anzeige - Display
- 3: Gehäuse
- 4: Bedienelement, Nothalt
- 5: Drehachse
- 6: Antriebsrad
- 7: Belag des Antriebsrads
- 8: Steckverbindung für elektrische Ladung
- 9: vorderes Stützrad
- 10: 3D - Scanner (Kollisionsschutz)
- 11: WLAN - Antenne
- 12: Lastregal
- 13: Transportgut
- 14: Induktives Aufnahmeelement für elektrische Energie
- 15: Zentrierelement
- 16: hintere Hubstange
- 17: Stellelement für eine hintere Hubstange
- 18: Stellelement für eine vordere Hubstange
- 19: vordere Hubstange
- 20: Antriebsrad, linksseitig
- 21: hinteres Stützrad
- 22: Servomotor für linksseitiges Antriebsrad
- 23: Achslager für das linksseitige Antriebsrad
- 24: Schubstange
- 25: Drehachse für einen vorderen Hubstangenhebel
- 26: vorderer Hubstangenhebel
- 27: Hubdreh - Hebel
- 28: Gelenkkopf
- 29: Zahnriemen für den rechtsseitigen Antrieb
- 30: Servomotor für den rechtsseitigen Antrieb
- 31: Stellelement, Gewindespindel
- 32: Antrieb für das Stellelement 31
- 33: Kraftübertragung vom Antrieb 32 zum Stellelement 31
- 34: Querlenker
- 35: Gabelkopf
- 36: Achshebel
- 37: hinterer Hubstangenhebel
- 38: Gelenk für einen Winkelhebel 40
- 39: Federelement
- 40: Winkelhebel
- 41: vordere Trägerplatten - Aufhängung
- 42: Sensor zur Erfassung der Drehbewegung des linkseitigen Antriebsrads
- 43: hintere Trägerplatten - Aufhängung
- 44: Stellraum für Energiespeicher
- 45: Anlenkpunkt des rechten Federelements am Gehäuse 3

## Patentansprüche

1. Transportfahrzeug zum Befördern von Lastregalen auf einer unebenen Bodenfläche mit:
a) einem Gehäuse (3) mit einer Trägerplatte (1) zum Tragen und Transportieren eines Lastregals (12), mit zwei, beidseitig in der Mitte des Gehäuses (3) an jeweils einer gesonderten Drehachse (5) angelenkten, separat angetriebenen, Antriebsrädern (20) und mit an der Vorderseite mindestens einem Stützrad (9) und mit an der Rückseite mindestens einem Stützrad (21), **dadurch gekennzeichnet, dass** der Transportfahrzeug ferner umfasst:
b) einem Querlenker (34), der die jeweils über einen Winkelhebel (40) um die Drehachse (5) schwenkbaren Antriebsräder (20) so verbindet, dass diese zueinander entgegengesetzte, vertikale Schwenkbewegungen ausführen können,
c) einem zentral angeordneten Stellelement (31), das über einen Hubdreh-Hebel (27) und eine mit diesem verbundene Schubstange (24) zwei vordere Hubstangen (19) und zwei hintere Hubstangen (16) zum Anheben oder Absenken der Trägerplatte (1) bewegen kann, wobei die vorderen Hubstangen (19) jeweils ein Stellelement (18) und die hinteren Hubstangen (16) jeweils ein Stellelement (17) zur separaten Höheneinstellung aufweisen,
d) einem System zur Energieversorgung eines Transportfahrzeugs entweder über induktive, im Boden verlegte, Leitungen, oder über stationär anfahrbare Energieversorgungs-Stationen, und
e) einem Steuerungssystem zum Steuern und Bewegen eines Transportfahrzeugs im Rahmen eines Lasten-Beförderungsprogramms.

2. Transportfahrzeug nach Anspruch 1, **dadurch gekennzeichnet, dass** der Schwerpunkt des Lastregals (12) mittels Sensoren erfasst, und das Ergebnis einer solchen Schwerpunkt-Ermittlung zur Steuerung der Stellelemente (17) und (18) verwendet wird.

3. Transportfahrzeug nach einem der vorhergehenden Ansprüche, **dadurch gekennzeichnet,**
**dass** Sensoren (42) zur Erfassung der Drehbewegung der Antriebsräder (20) vorgesehen sind, die auch in Abhängigkeit von der Geschwindigkeit des Transportfahrzeugs den Schlupf an jedem Antriebsrad (20) ermitteln können.

4. Transportfahrzeug nach einem der vorhergehenden Ansprüche, **dadurch gekennzeichnet,**
**dass** mittels eines Neigungssensors die Neigung eines Lastregals (12) ermittelt wird.

5. Verfahren zum Befördern von Lastregalen auf einer unebenen Bodenfläche mittels eines Transportfahrzeugs nach einem der Ansprüche 1 bis 4, mit den folgenden Merkmalen:
a) ein Transportfahrzeug fährt unter ein zu transportierendes Regalsystem (12) und hebt dieses mittels eines Stellelements (31) und die mittelbar durch diese Bewegung vertikal nach oben bewegten Schubstangen (19, 16) mittels der Trägerplatte (1) soweit in die Höhe, dass die Füße des Lastregals (12) auch bei unebenem Boden nicht während der Fahrt die Bodenfläche berühren, und bewegt sich zum Zielort,
b) während der Fahrt zum Zielort werden Bodenunebenheiten mittels der einzeln angetriebenen Antriebsräder (20) und ihrer Bewegungsmöglichkeit um eine dezentral angeordnete Drehachse (5), sowie ihren Bewegungsverbund über den jeweiligen Winkelhebel (40) mit einem Querlenker (34) so ausgeglichen, dass das Transportfahrzeug nur geringfügigen Schwankungen unterworfen wird,
c) bei auftretenden Steigungen wird mittels eines Neigungssensors die Schräglage des Lastregals ermittelt, und die horizontale Lage der Trägerplatte (1) wird mittels Stellelementen (17) und (18) soweit als nötig korrigiert,
d) bei der Ankunft am Zielort wird das Lastregal (12) mittels der abgesenkten Schubstangen (19) und (16) am gewünschten Ort abgesetzt.

6. Verfahren nach Anspruch 7,
**dadurch gekennzeichnet,**
**dass** der Schwerpunkt des Lastregals (12) mittels Sensoren erfasst, und das Ergebnis einer solchen Schwerpunkt-Ermittlung zur Steuerung der Stellelemente (17) und (18) verwendet wird, und dass mittels eines Neigungssensors die Neigung eines Lastregals (12) ermittelt wird.

7. Verfahren nach Anspruch 5 oder 6,
**dadurch gekennzeichnet,**
**dass** Sensoren (42) zur Erfassung der Drehbewegung der Antriebsräder (20) vorgesehen sind, die auch in Abhängigkeit von der Geschwindigkeit des Transportfahrzeugs den Schlupf an jedem Antriebsrad (20) ermitteln können.

## Claims

1. Transport vehicle for transporting heavy duty racks on an uneven ground surface comprising:
a) a housing (3) having a carrier plate (1) for carrying and transporting a heavy duty rack (12), having two separately driven drive wheels (20) each hinged to a separate axis of rotation (5), one on each of the two sides in the center of the housing (3), and having at least one stabilizing wheel (9) at the front, and having at least one stabilizing wheel (21) at the rear,
**characterized in that** the transport vehicle furthermore comprises:
b) a transverse control arm (34), which connects the drive wheels (20), which each can be pivoted about the axis of rotation (5) by means of an angle lever (40), such that they are able to carry out mutually opposite vertical pivoting movements,
c) a centrally arranged actuating element (31), which can move two front lift rods (19) and two rear lift rods (16) by means of a lifting rotary lever (27) and a push rod (24) connected thereto, for raising or lowering the carrier plate (1), wherein the front lift rods (19) each have an actuating element (18) and the rear lift rods (16) each have an actuating element (17) for separate height adjustment,
d) a system for supplying energy to a transport vehicle either via inductive lines laid in the ground or via stationary energy supply stations which can be driven up to, and
e) a control system for controlling and moving a transport vehicle within the scope of a load transportation program.

2. Transport vehicle according to Claim 1, **characterized in that**
the center of gravity of the heavy duty rack (12) is detected by means of sensors, and the result of such a center of gravity determination is used in order to control the actuating elements (17) and (18) .

3. Transport vehicle according to one of the preceding claims,
**characterized in that**
sensors (42) for detecting the rotary movement of the drive wheels (20) are provided and can also determine the slip at each drive wheel (20) depending on the speed of the transport vehicle.

4. Transport vehicle according to one of the preceding claims,
**characterized in that**
the inclination of a heavy duty rack (12) is determined by means of an inclination sensor.

5. Method for transporting heavy duty racks on an uneven ground surface by means of a transport vehicle according to one of Claims 1 to 4, said method having the following features:
a) a transport vehicle travels beneath a rack system (12) to be transported and vertically lifts this by means of an actuating element (31) and the push rods (19, 16), moved directly vertically upwardly as a result of this movement by means of the carrier plate (1), to such an extent that the feet of the heavy duty rack (12) do not contact the ground surface during the transportation, even if the ground is uneven, and moves to the target location,
b) unevennesses in the ground are compensated for during the transportation to the target location by means of the individually driven drive wheels (20) and the possibility for movement thereof about a decentrally arranged axis of rotation (5), and also the combined movement thereof via the respective angle lever (40) with a transverse control arm (34), such that the transport vehicle is subjected only to minor fluctuations,
c) in the event of gradients the inclined position of the heavy duty rack is determined by means of an inclination sensor, and the horizontal position of the carrier plate (1) is corrected as necessary by means of actuating elements (17) and (18),
d) upon arrival at the target location the heavy duty rack (12) is set down at the desired location by means of the lowered push rods (19) and (16) .

6. Method according to Claim 7,
**characterized in that**
the center of gravity of the heavy duty rack (12) is detected by means of sensors, and the result of such a center of gravity determination is used to control the actuating elements (17) and (18), and **in that** the inclination of a heavy duty rack (12) is determined by means of an inclination sensor.

7. Method according to Claim 5 or 6, **characterized in that**
sensors (42) for detecting the rotary movement of the drive wheels (20) are provided and can also determine the slip at each drive wheel (20) depending on the speed of the transport vehicle.

## Revendications

1. Véhicule de transport destiné à transporter des étagères chargées sur un sol dont la surface n'est pas plane, présentant :
a) un boîtier (3) doté d'une plaque de support (1) qui porte et transporte une étagère chargée (12) et présentant deux roues d'entraînement (20) entraînées séparément et articulées des deux côtés au milieu du boîtier (3) sur un axe de rotation (5) séparé, avec sur le côté avant au moins une roue de soutien (9) et sur le côté arrière au moins une roue de soutien (21), **caractérisé en ce que**
le véhicule de transport comporte en outre :
b) un bras transversal (34) qui relie par l'intermédiaire d'un levier coudé (40) les roues d'entraînement (20) qui pivotent chacune autour de l'axe de rotation (5), de telle sorte que ces roues puissent exécuter des déplacements verticaux de pivotement dans des sens mutuellement opposés,
c) un élément central d'ajustement (31) qui peut déplacer par l'intermédiaire d'un levier rotatif de levage (27) auquel est reliée une tringle de poussée (24) deux tringles avant de levage (19) et deux tringles arrière de levage (16) qui relèvent ou abaissent la plaque de support (1), chacune des tringles avant de levage (19) présentant un élément d'ajustement (18) et chacune des tringles arrière de levage (16) présentant un élément d'ajustement (17) permettant des ajustements en hauteur séparés,
d) un système d'alimentation en énergie du véhicule de transport par des conducteurs inductifs posés dans le sol ou par des postes stationnaires d'alimentation en énergie sur lesquels les véhicule peut se déplacer et
e) un système de commande qui commande et déplace le véhicule de transport dans le cadre d'un programme de transport de charges.

2. Véhicule de transport selon la revendication 1, **caractérisé en ce que** le centre de masse de l'étagère chargée (12) est saisi au moyen de capteurs et **en ce que** le résultat de cette détermination du centre de masse est utilisé pour commander les éléments d'ajustement (17) et (18).

3. Véhicule de transport selon l'une des revendications précédentes, **caractérisé en ce qu'**il présente des capteurs (42) de saisie du déplacement de rotation des roues d'entraînement (20) qui peuvent également déterminer le patinage de chaque roue d'entraînement (20) en fonction de la vitesse du véhicule de transport.

4. Véhicule de transport selon l'une des revendications précédentes, **caractérisé en ce que** l'inclinaison d'une étagère chargée (12) est déterminée au moyen d'un capteur d'inclinaison.

5. Procédé de transport d'étagères chargées sur un sol à surface non plane au moyen d'un véhicule de transport selon l'une des revendications 1 à 4, le procédé présentant les caractéristiques suivantes :
a) un véhicule de transport se déplace en dessous d'un système d'étagères (12) à transporter et relève ces dernières au moyen d'un élément d'ajustement (31), des tringles de poussée (19, 16) déplacées indirectement à la verticale vers le haut par ce déplacement jusqu'à la hauteur à laquelle les pieds de l'étagère de charges (12) ne touchant pas la surface du sol pendant le déplacement même si le sol est irrégulier, et se déplace vers sa destination,
b) pendant le déplacement vers la destination, les irrégularités du sol sont compensées au moyen des roues d'entraînement (20) entraînées individuellement et de leur possibilité de déplacement autour d'un axe de rotation (5) disposé en position décentralisée, ainsi que de leur liaison de déplacement avec un bras transversal (34) par l'intermédiaire de chacun des leviers coudés (40), de telle sorte que le véhicule de transport ne subisse que de légères oscillations,
c) lors du passage sur des pentes, la position oblique de l'étagère de charge est déterminée au moyen d'un capteur d'inclinaison et la position horizontale de la plaque de support (1) est corrigée dans la mesure nécessaire au moyen d'éléments d'ajustement (17) et (18), et
d) lors de l'arrivée à la destination, l'étagère chargée (12) est déposée à l'emplacement souhaité au moyen de l'abaissement des tringles de poussée (19) et (16) .

6. Procédé selon la revendication 7, **caractérisé en ce que** le centre de masse de l'étagère chargée (12) est déterminé au moyen de capteurs, **en ce que** le résultat de cette détermination du centre de masse est utilisé pour commander les éléments d'ajustement (17) et (18) et **en ce que** la pente de l'étagère chargée (12) est déterminée au moyen d'un capteur d'inclinaison.

7. Procédé selon la revendication 5 ou 6, **caractérisé en ce que** sont prévus des capteurs (42) de saisie du déplacement de rotation des roues d'entraînement (20) qui peuvent également déterminer le patinage de chaque roue d'entraînement (20) en fonction de la vitesse du véhicule de transport.
